**Europäisches Patentamt**

**European Patent Office**

**Office européen des brevets**

(19)

(11) Veröffentlichungsnummer: **0 210 282 B1**

# (12) EUROPÄISCHE PATENTSCHRIFT

(45) Veröffentlichungstag der Patentschrift: **19.08.92**

(21) Anmeldenummer: **84113758.1**

(22) Anmeldetag: **14.11.84**

(51) Int. Cl.⁵: **B05C 11/10**, B44D 3/00, B01F 15/04

(54) **Vorrichtung zum dosierten Zuteilen verschiedener Komponenten und/oder dosierten Aufteilen bzw. Ausbringen flüssiger oder pastöser Stoffe.**

(43) Veröffentlichungstag der Anmeldung:
**04.02.87 Patentblatt 87/06**

(45) Bekanntmachung des Hinweises auf die
Patenterteilung:
**19.08.92 Patentblatt 92/34**

(84) Benannte Vertragsstaaten:
**CH DE FR GB IT LI**

(56) Entgegenhaltungen:
DE-A- 3 200 470     DE-A- 3 201 221
FR-A- 1 206 735     FR-A- 2 390 375
GB-A- 889 724     US-A- 2 923 438
US-A- 3 097 764     US-A- 3 670 785
US-A- 3 684 250     US-A- 3 801 074
US-A- 3 851 798     US-A- 3 926 345
US-A- 3 970 288     US-A- 4 019 653
US-A- 4 209 258     US-A- 4 366 918

(73) Patentinhaber: **Nusser, Josef**
**Hauptstrasse 9**
**W-7963 Eichstegen(DE)**

(72) Erfinder: **Nusser, Josef**
**Hauptstrasse 9**
**W-7963 Eichstegen(DE)**

## Beschreibung

Die Erfindung bezieht sich auf eine Vorrichtung gemäß dem Oberbegriff des Anspruchs 1. Eine derartige Vorrichtung ist aus der Patentschrift US-A 3.097.764 bekannt. Bei der bekannten Vorrichtung wird aus separaten Behältern mittels unabhängiger Pumpen Epoxydharz und Härter abgepumpt und über Siebe und Erhitzer einem Mix- und Sprühkopf zugeführt. Um den Druck des Epoxydharzes und des Härters im Bereich vor dem Mix- und Sprühkopf auf einem festgelegten Wert zu halten sind weitere Pumpen mit Fühlern, Schaltern und einem Motor vorgesehen. Wenn der Auslaßdruck geringer ist als der vorher festgelegte Wert wird der Motor und die Pumpen eingeschaltet und wieder ausgeschaltet, wenn der Auslaßdruck größer ist als der vorher festgelegte Wert. Mittels dieser Vorrichtung wird der Auslaßdruck des Epoxydharzes und des Härters geregelt und dadurch deren Zuführmenge bestimmt.

Die Aufgabe der Erfindung ist eine Vorrichtung zu schaffen, mittels der mit einfachen Mitteln und geringem Zeitaufwand eine exakte Zuteilung verschiedener Komponenten zwecks Herstellung einer gewünschten Mischung erreicht wird und deren Menge auf das tatsächlich-erforderliche Maß abgestimmt ist. Bei Farbspritzgeräten soll bereits fertige mit Bindemittel versetzte und dadurch zum Verkleben neigende Farbe in Pumpe und Zuleitung entfallen und ein schneller Farbtonwechsel unter Einsparung von Reinigungsmitteln und Reinigungsarbeiten ermöglicht werden. Desweiteren soll eine exakt dosierte Aufteilung, Ausbringung und Zerstäubung erreicht werden.

Diese Aufgabe wird durch eine Vorrichtung gemäß Anspruch 1 gelöst.

Ein ruhiger Lauf und eine in jedem Drehwinkelbereich gleichmäßige Dosierung wird erreicht, indem die Verdrängereinheiten aus im wesentlichen rotationssymmetrischen Verdrängerelementen bestehen. Um einen sicheren, jederzeit verfügbaren Antrieb der Verdrängereinheiten zur Verfügung zu haben und die Frequenz und und deren Verhältnis anzusteuern ist vorgesehen, daß für jede Verdrängereinheit ein dessen Frequenz ansteuerbarer Antriebsmotor vorgesehen ist. Eine zweckmäßige Ausgestalung der Vorrichtung, insbesondere zum Zuteilen und Mischen verschiedener Komponenten, beispielsweise chemische Substanzen, Farben, Zuschlagstoffe und dergl. ist gegeben, indem die einzelnen Komponenten aus den Behältern dem Mengendosierer zugeleitet und dort im vorgesehenen Verhältnis über Leitungen oder direkt dem Mischbehälter zugeteilt werden. Um Farbrückstände auf ein Mindestmaß zu reduzieren oder ganz auszuschließen soll die auszubringende Farbe nach Weg und Zeit möglichst kurz vor der Zerstäubung hergestellt werden, dazu wird der Mischbehälter zur Homogenisierung der Komponenten als Mischkammer ausgebildet und in die Zerstäubungsdüse bei Spritzgeräten integriert oder unmittelbar vorgelagert. Soll ein Volumenstrom in einem bestimmten Verhältnis aufgeteilt und zerstäubt werden, so wird der für mehrere Verteilerdüsen vorgesehene Volumenstrom mittels Mengendosierer in gleiche oder proportionale Teilströme aufgeteilt und den Zerstäubungsdüsen zugeführt. Es wird angestrebt, bei geringem Zeitaufwand eine möglichst homogene Mischung zu erhalten, dies wird erreicht indem die Zuteilung verschiedener Komponenten gleichzeitig erfolgt. Ein genau und einfach zu bestimmender Dosiervorgang wird erreicht, indem unter Berücksichtigung des Schluckvolumens der Verdrängereinheiten das Dosier- und/oder Teilstromverhältnis vom mittels Ansteuergerät wahlweise ansteuerbaren Frequenzverhältnis zwischen den Antriebsmotoren bestimmbar ist. Der Aufwand für Ansteuergeräte soll möglichst niedrig gehalten werden, dazu soll die Anzahl der Ansteuergeräte geringer sein als die Anzahl der Antriebsmotore. Es sollen höchstens soviel Ansteuergeräte vorgesehen werden, als für die Speisung der gleichzeitig in Betrieb befindlichen Antriebsmotore erforderlich sind. Um mit wenigen Ansteuergeräten eine größere Anzahl Motore zu speisen, werden die Ansteuergeräte den jeweils zu speisenden Motoren nacheinander vorgeschaltet. Störfaktoren wie das Ausdehnungsverhalten der Medien bei Temperaturunterschieden und Schlupf der Verdrängereinheiten werden durch die volumetrische Zuteilung entsprechend dem temperaturabhängigen Ausdehnungsverhalten der betreffenden Stoffe und /oder entsprechend dem druckdifferenzabhängigen Schlupf ausgleichend geregelt. Bei Verzicht der Motore für den Antrieb der Mengendosierer werden dieselben mittels des druckbeaufschlagten Durchsatzmediums angetrieben. Zur blasenfreien Versorgung des Mengendosierers und guten Zerstäubung wird das Medium druckbeaufschlagt dem Mengendosierer und/oder den Zerstäubungsdüsen zugeführt. Zur schnellen und fehlerfreien Festlegung des Komponenten- und Teilstromverhältnisses wird das Komponenten- und Teilstromverhältnis durch wählbare Programme bestimmt. Damit diese Arbeit auch von Hilfskräften unverwechselbar ausgeführt wird, ist das Dosiermengenverhältnis mittels einsteckbarer Programmkarten wählbar.

Im folgenden wird die Erfindung anhand von Ausführungsbeispielen darstellenden Zeichnung näher erläutert. Es zeigt

Figur 1 eine schematische Darstellung von Mengendosierer, Leitungen, Behälter und Düse,

Figur 2 Mengendosierer, Behälter, Leitungen und Düsen schematisch dargestellt.

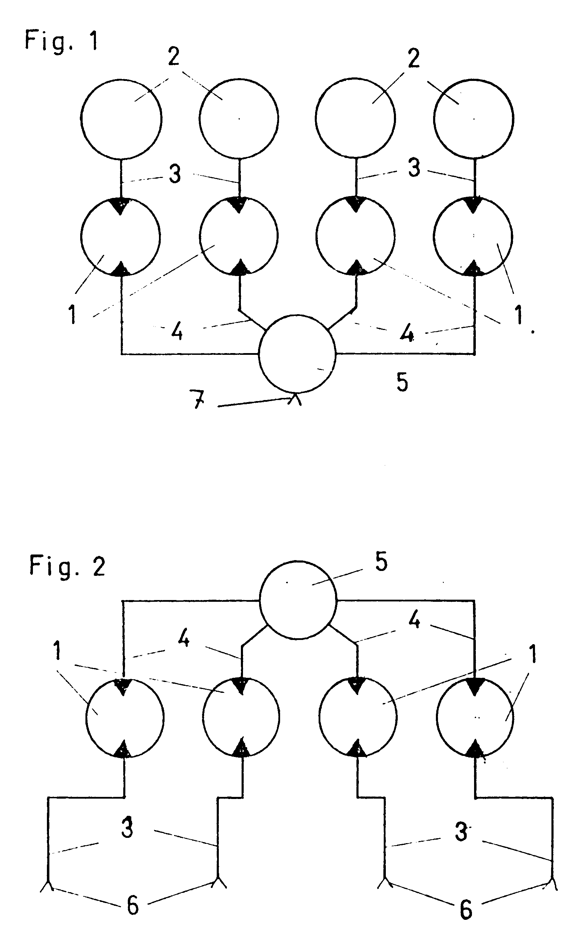

Bei der Ausgestaltung nach der Fig. 1 bestimmen die Mengendosierer 1 die Durchsatzmenge und das Durchsatzverhältnis der aus den Behältern 2 über die Leitungen 3 zugeführten Komponenten und fördern dieselben über die Leitungen 4 in den Behälter oder die Sammelleitung 5. Durch eine Mischeinrichtung können die zugeführten Komponenten im Behälter 5 homogenisiert werden. Diese Ausgestaltung ist insbesondere bei Farbmischanlagen von großem Vorteil. Bei Spritzpistolen hat es sich als zweckmäßig erwiesen, den Behälter 5 als Mischkammer zu gestalten und in die Zerstäubungsdüse 7 zu integrieren oder mit möglichst kurzem Abstand zuvor anzuordnen. Dadurch ist gewährleistet, daß bei Farbtonwechsel oder Einsatzende keine oder nur geringfügige Menge des vorhergehenden Farbtones als Rückstand verbleibt.

Die Mengendosierer 1 sind aus volumetrischen Verdrängereinheiten gebildet, die aus Zahnrad-, Zellen-, Ovalrad- und Hubkolbenverdränger oder dergl. bestehen können. Zwischen den einzelnen Mengendosierern kann eine elektrische Verknüpfung bestehen und der Volumendurchsatz je Umdrehung veränderbar sein. Bei Einzelantrieb der Mengendosierer 1 mittels frequenzsteuerbaren, beispielsweise Schrittmotoren, kann das Durchsatzvolumen und das Teilmengenverhältnis leicht reguliert werden. Der Mengendosierer 1 kann als Förderpumpe oder als druckbetriebener Durchflußdosierer ausgebildet sein.

Nach der Fig. 2 gelangt das Medium aus dem Behälter oder der Sammelleitung 5 durch die Leitungen 4 über die die Durchsatzmenge und das Durchsatzverhältnis bestimmenden Mengendosierer 1 in die Leitungen 3 und zu den Düsen 6.

Von Vorteil der Erfindung ist es, daß aus einer geringen Anzahl von Komponenten auf den Bedarf abgestimmt, sämtliche Mischungskombinationen, insbesonder bei Farbe jeder Farbton hergestellt werden kann. Daraus eribt sich eine geringe Lagerhaltung und die Vermeidung von Restmengen. Durch die exakte Ausbringung oder Zerstäubung in Düsen wird die mit dem betreffenden Medium zu behandelnde Fläche gleichmäßig beaufschlagt.

**Patentansprüche**

1. Vorrichtung zum dosierten Zuteilen verschiedener Komponenten und/oder dosierten Aufteilen bzw. Ausbringen flüssiger oder pastöser Stoffe mittels jedem Teilstrom zugeordneten Mengendosierer (1), der eine von einem Motor antreibbare Pumpe aufweist,

   **dadurch gekennzeichnet,**

   daß jeder Mengendosierer (1) zur proportionalen oder gleichen Zuteilung verschiedener Komponenten und/oder Aufteilung eines Volumenstromes in gleiche oder proportionale Teilströme bzw. Ausbringung aus einer volumetrisch wirksamen Verdrängereinheit besteht und für jede Verdrängereinheit ein dessen Frequenz mittels Ansteuergerät ansteuerbarer Antriebsmotor vorgesehen ist und das Frequenzverhältnis zwischen den Antriebsmotoren mittels Ansteuergerät wahlweise ansteuerbar ist.

2. Vorrichtung nach Anspruch 1, dadurch gekennzeichnet, daß Verdrängereinheiten im wesentlichen aus rotationssymmetrischen Verdrängerelementen gebildet sind.

3. Vorrichtung nach Anspruch 1 oder 2, dadurch gekennzeichnet, daß die einzelnen Komponenten aus den Behältern (2) dem Mengendosierer (1) zugeleitet und vom Mengendosierer (1) im vorgesehenen Verhältnis über Leitungen (4) oder direkt dem Mischbehälter (5) zugeteilt werden.

4. Vorrichtung nach Anspruch 1 bis 3, dadurch gekennzeichnet, daß der Mischbehälter (5) zur Homogenisierung der Komponenten als Mischkammer ausgebildet in die Zerstäubungsdüse bei Spritzpistolen oder Spritzgestängen integriert oder unmittelbar vorgelagert ist.

5. Vorrichtung nach Patentansprüchen 1 bis 4, bei der der für mehrere Verteilerdüsen (6) vorgesehene Volumenstrom mittels Mengendosierer (1) in gleiche oder proportionale Teilströme aufgeteilt und den Verteilerdüsen (6) zugeführt wird.

6. Vorrichtung nach Patentansprüchen 1 bis 5, bei der die Zuteilung verschiedener Komponenten gleichzeitig erfolgt.

7. Vorrichtung nach Patentansprüchen 1 bis 6, bei der die Anzahl der Ansteuergeräte geringer ist als die Anzahl der Antriebsmotoren und höchstens soviel Ansteuergeräte vorgesehen werden, als für die Speisung der gleichzeitig in Betrieb befindlichen Antriebsmotore erforderlich sind.

8. Vorrichtung nach Patentansprüchen 1 bis 7, bei der die Anzahl der Ansteuergeräte geringer ist als die Anzahl der für eine Mischung vorgesehenen Komponenten und diese Ansteuergeräte den jeweils zu speisenden Antriebsmotoren nacheinander vorgeschaltet werden.

9. Vorrichtung nach Patentansprüchen 1 bis 8, bei der die volumetrische Zuteilung entsprechend dem temperaturabhängigen Ausdehnungsverhalten der betreffenden Stoffe und/oder entsprechend dem druckdifferenzabhängigen Schlupf ausgleichend geregelt wird.

10. Vorrichtung nach Patentansprüchen 1 bis 9, bei der die Mengendosierer mittels des druckbeaufschlagten Durchsatzmediums angetrieben werden.

11. Vorrichtung nach Patentansprüchen 1 bis 10, bei der das Medium druckbeaufschlagt dem Mengendosierer (1) und/oder den Zerstäubungsdüsen (6) zugeführt wird.

12. Vorrichtung nach Patentansprüchen 1 bis 11, bei der das Komponenten- und/oder Teilstromverhältnis durch wählbare Programme bestimmbar ist.

13. Vorrichtung nach Patentansprüchen 1 bis 12, bei der das Dosiermengenverhältnis mittels einsteckbarer Programmkarten wählbar ist.

14. Vorrichtung nach Patentansprüchen 1 bis 13, bei der die volumetrischen Verdrängereinheiten als Zahnrad- oder Flügelzellenverdrängereinheiten ausgebildet sind.

15. Vorrichtung nach Patentansprüchen 1 bis 14, bei der die Verdrängereinheiten als Pumpe oder Mengenteiler ausgebildet sind.

16. Vorrichtung nach Patentansprüchen 1 bis 15, bei der die frequenzansteuerbaren Motoren als Schrittmotoren ausgebildet sind.

**Claims**

1. The device for the measured apportionment of different components and/or the measured division or dispersion of liquid or pasty substances by means of a volumetric dosing apparatus (1), to which each component flow is assigned, and which has a motor-driven pump

is characterized in that

each dosing apparatus (1) for proportional or equal apportionment of different components and/or division or dispersion of a bulk flow into equal or proportional component flows comprises a volumetrically effective displacer unit, each displacer unit having a driving motor, the frequency of which is to be controlled by a control unit, and the frequency-response ratio between the driving motors is selected by means of this control unit.

2. The device as according to claim 1 is characterized in that the displacer units are essentially constructed of dynamically balanced displacer elements.

3. The device as according to claim 1 or 2 is characterized in that the individual components are fed from the tank (2) to the volumetric dosage apparatus (1) and are apportioned by the volumetric dosage apparatus (1) in predetermined proportions through pipes (4) or fed directly into the mixing tank (5).

4. The device as according to claims 1 to 3 is characterized in that the mixing tank (5) for the homogenization of the components, which constitutes a mixing chamber, is integrated within the spray diffuser with spray guns or spray rods or is situated directly before the spray diffuser.

5. Device as according to patent claims 1 to 4, whereby a bulk flow intended for several dispersion pipes (6) is divided into equal or proportional component flows by means of a volumetric dosing apparatus (1), and is fed to the dispersion pipes (6).

6. Device as according to patent claims 1 to 5, whereby the apportionment of different components is simultaneously effected.

7. Device as according to patent claims 1 to 6, whereby the number of control units is smaller than the number of driving motors and for which there will only be as many control units as are necessary for the supply of power to the driving motors whilst these are in operation.

8. Device as according to patent claims 1 to 7, whereby the number of control units is smaller than the number of components intended for mixing, and whereby these control units are to be connected to the driving motors, to which power is to be supplied, in series one after the other.

9. Device as according to patent claims 1 to 8, whereby volumetric apportionment will be regulated to compensate for the temperature-related expansion behaviour of the respective substances and/or to compensate for pressure-related slippage thereof.

10. Device as according to patent claims 1 to 9, whereby the volumetric dosing apparatus is driven by means of a pressurized throughput medium.

11. Device as according to patent claims 1 to 10, whereby the throughput medium applying pressure is fed to the volumetric dosing apparatus (1) and/or to the spray diffusers (6).

12. Device as according to patent claims 1 to 11, whereby the proportion of components and/or of the component flow can be determined by means of selection programmes.

13. Device as according to patent claims 1 to 12, whereby the dosage proportions are selected by the insertion of a programme card.

14. Device as according to patent claims 1 to 13, whereby the volumetric displacer units are in the form of toothed-gear or rotary vane-type displacer units.

15. Device as according to patent claims 1 to 14, whereby the displacer units are in the form of a pump or flow divider.

16. Device as according to patent claims 1 to 15, whereby the frequency-controlled motors are in the form of stepping motors.

**Revendications**

1. Dispositif conçu pour le dosage et la répartition de composants de natures différentes et/ou le dosage et la répartition, ou la distribution de matériaux liquides ou pâteux au moyen d'un doseur (1) affecté à chacun des flux partiels, le doseur étant équipé d'une pompe entraînée par un moteur,

   caractérisé par le fait que

   d'une part chaque doseur (1), chargé de la répartition en parts égales ou proportionnelles de composants de natures différentes et/ou de la répartition d'un flux volumique en flux partiels proportionnels ou égaux, ou de leur distribution, consiste en une unité de refoulement volumétrique et que d'autre part chaque unité de refoulement est dotée d'un moteur d'entraînement dont la fréquence est sélectionnée au moyen d'un appareil de commande, le rapport de fréquences entre les moteurs d'entraînement pouvant être sélectionné au moyen d'un appareil de commande.

2. Dispositif d'après la revendication 1, caractérisé par le fait que les unités de refoulement sont pour l'essentiel formées d'éléments refouleurs à symétrie de révolution.

3. Dispositif d'après les revendications 1 ou 2, caractérisé par le fait que les divers composants sont acheminés des réservoirs (2) au doseur (1), d'où ils sont acheminés vers le mélangeur (5) dans le rapport défini, par des conduites (4) ou directement.

4. Dispositif d'après les revendications 1 à 3, caractérisé par le fait que le mélangeur (5) destiné à l'homogénéisation des composants est conçu comme chambre de mélange intégrée à la buse de pulvérisation des pistolets-pulvérisateurs ou des bras de pulvérisation, ou montée directement en amont.

5. Dispositif d'après les revendications 1 à 4, dont le flux volumique prévu pour plusieurs buses de distribution (6) est réparti en flux partiels égaux ou proportionnels au moyen d'un doseur de débit (1) et acheminé vers les buses de distribution (6).

6. Dispositif d'après les revendications 1 à 5, dont la répartition des divers composants s'effectue simultanément.

7. Dispositif d'après les revendications 1 à 6, dont le nombre d'appareils de commande est inférieur au nombre des moteurs d'entraînement, et dont le nombre d'appareils de commande prévus doit correspondre au plus au nombre de moteurs d'entraînement devant être simultanément alimentés.

8. Dispositif d'après revendications 1 à 7, dont le nombre d'appareils de commande est inférieur à celui des composants prévus pour constituer un mélange, et dont les appareils de commande sont successivement commutés sur les moteurs d'entraînement devant être alimentés.

9. Dispositif d'après revendications 1 à 8, dont la répartition volumétrique en fonction de la dilation à la chaleur des matériaux considérés et/ou en fonction du glissement variant selon la différence de pression, est soumise à une régulation compensative.

10. Dispositif d'après les revendications 1 à 9, dont les doseurs sont entraînés par le flux du matériau sous pression.

11. Dispositif d'après revendications 1 à 10, dont le matériau est acheminé sous pression vers le doseur (1) et/ou vers les buses de pulvérisation (6).

**12.** Dispositif d'après les revendications 1 à 11, dont le rapport des composants et/ou du flux partiel peut être défini à l'aide de divers programmes.

**13.** Dispositif d'après les revendications 1 à 12, dont le rapport de dosage peut être sélectionné au moyen de cartes de programmation enfichables.

**14.** Dispositif d'après les revendications 1 à 13, dont les unités de refoulement volumétriques sont conçues comme unités de refoulement à roues dentées ou à cellules semi-rotatives.

**15.** Dispositif d'après les revendications 1 à 14, dont les unités de refoulement sont conçues comme pompe ou comme diviseur de débit.

**16.** Dispositif d'après les revendications 1 à 15, dont les moteurs à commande de fréquence sont conçus comme moteurs pas à pas.

Fig. 1

Fig. 2